# EUROPÄISCHE PATENTSCHRIFT

(11) **EP 1 511 660 B1**
(45) Veröffentlichungstag und Bekanntmachung des Hinweises auf die Patenterteilung: **08.03.2006**
(21) Anmeldenummer: 03735320.8
(22) Anmeldetag: 23.05.2003
(51) Int. Cl.: B60R 21/26

(54) **GASGENERATOR UND VORRICHTUNG ZUR ELEKTRISCHEN KONTAKTIERUNG EINES GASGENERATORS**
GAS GENERATOR AND DEVICE FOR ELECTRICALLY CONTACTING A GAS GENERATOR
DISPOSITIF DE PRODUCTION DE GAZ ET DISPOSITIF POUR METTRE UN DISPOSITIF DE PRODUCTION DE GAZ EN CONTACT ELECTRIQUE

(30) Priorität: 28.05.2002 DE 10223829
(43) Veröffentlichungstag der Anmeldung: 09.03.2005
(73) Patentinhaber: TAKATA-PETRI (Ulm) GmbH, 89081 Ulm (DE)
(72) Erfinder: RETALLICK, David, 86505 Münsterhausen (DE); ECKLE, Jens, 89284 Pfaffenhofen (DE); SCHWANN, Martin, 89134 Blaustein (DE); MAURER, Lothar, 89143 Blaubeuren (DE)
(74) Vertreter: Baumgärtel, Gunnar
(86) Internationale Anmeldenummer: PCT/DE2003/001732
(87) Internationale Veröffentlichungsnummer: WO 2003/101789

(56) Entgegenhaltungen:
- EP-A- 1 035 400
- CH-A- 692 367
- DE-A- 4 317 737
- DE-C- 19 708 307
- DE-U- 29 900 590
- US-A- 6 082 758

## Beschreibung

Die Erfindung betrifft einen Gasgenerator zum Befüllen eines Airbags für ein Kraftfahrzeug gemäß dem Oberbegriff des Anspruchs 1 und eine Vorrichtung zur elektrischen Kontaktierung eines Gasgenerators gemäß dem Oberbegriff des Anspruchs 13.

Gasgeneratoren dienen in Kraftfahrzeugen dazu, Airbags bei Bedarf, also insbesondere bei einem Unfall, aufzublasen. Der Gasgenerator wird dabei üblicherweise über ein elektrisches Signal aktiviert und ist auf das Massepotential des Fahrzeugs geerdet. Bei bekannten Gasgeneratoren werden zur Erdung die Befestigungsmittel verwendet, über die der Gasgenerator bzw. sein Gehäuse an dem Fahrzeug befestigt ist. Ober diese elektrisch leitfähigen Befestigungsteile wird der Gasgenerator an einem ebenfalls elektrisch leitfähigen Fahrzeugteil, insbesondere einem Karosserieteil oder einem metallischen Teil eines Kraftfahrzeugsitzes, angebunden. Über diese Anbindung wird der Kontakt des Gasgeneratorgehäuses mit dem Massepotential des Fahrzeuges hergestellt. Die Zuverlässigkeit des so hergestellten Erdung bzw. Verbindung mit dem Massepotential ist von einer Vielzahl äußerer Faktoren abhängig, wie beispielsweise dem Auftreten von Kriechströmen oder der korrekten Montage des jeweiligen Befestigungsteiles. Auch Mehrfacherdungen können so auftreten, die eine definierte Erdung des Gasgenerators auf ein eindeutiges Massepotential unmöglich machen. Weiterhin werden mehrere Gasgeneratoren, die an unterschiedlichen Stellen im Fahrzeug angeordnet sind, auf unterschiedliche Massepotentiale des Fahrzeugs gelegt, da das Massepotential beispielsweise durch das Auftreten von Kriechströmen an unterschiedlichen Stellen des Kraftfahrzeuges unterschiedliche Werte annehmen kann.

Aus der DE 43 17 737 A1 geht ein Gasgenerator zum Befüllen eines Airbags hervor. Der Gasgenerator ist elektrisch verbunden mit einem Hupenschalter in das Fahrzeug eingebaut. Über eine Buchse und eine Lenkwelle, an die auch der Hupenschalter angeschlossen ist, ist der Gasgenerator mit dem negativen Pol der Batterie verbunden.

Aufgabe der Erfindung ist daher, eine verbesserte Masseverbindung für Gasgeneratoren anzugeben.

Die Aufgabe wird durch einen Gasgenerator mit den Merkmalen des Anspruchs 1 gelöst. Dem gemäß ist der Gasgenerator gegenüber dem Fahrzeug elektrisch isoliert einbaubar und kann über eine separate Masseverbindung direkt mit der elektrischen Masse des Fahrzeugs, insbesondere mit einem definierten Massepotential verbunden werden. Durch die elektrische Isolation des Gasgenerators gegenüber dem Fahrzeug und die Verbindung mit einem definierten Massepotential liegt der Gasgenerator auf einem definierten Massepotential. Auch bei Verwendung einer Vielzahl an unterschiedlichen Stellen im Fahrzeug eingebauter Gasgeneratoren kann so ein für alle Gasgeneratoren gleiches Massepotential vorgegeben werden, da das Massepotential unabhängig vom Einbauort ist.

Unter einer direkten Verbindung der Masseverbindung des Gasgenerators wird hier verstanden, dass die Masseverbindung ohne Umwege mit einem vorgegebenen Massepotential verbunden ist. Dies kann beispielsweise durch eine elektrische Leitung zwischen dem Gasgenerator und dem das Massepotential definierenden Punkt des Fahrzeugs, insbesondere einem Pol der Fahrzeugbatterie, erreicht werden. Die Masseverbindung wird also insbesondere nicht über Fahrzeugsitze, Karosserieteile oder mechanische Befestigungsmittel hergestellt.

Eine Verbindung des Gasgeneratorgehäuses über die separate Masseverbindung mit der elektrischen Masse des Fahrzeuges ist vorteilhaft, da die bekannten Gasgeneratoren über das Gasgeneratorgehäuse des Gasgenerators auf Masse gelegt wurden. Diese Gasgeneratoren können so weiter verwendet werden.

Eine einfache Montage wird dadurch erreicht, dass die Masseverbindung zwischen dem Gasgeneratorgehäuse und einem Zündstecker so einklemmbar ist, dass die Masseverbindung mit dem Gasgeneratorgehäuse in Kontakt steht. Bei der Verbindung des Zündsteckers mit dem Gasgenerator kann so gleichzeitig durch das Verklemmen der Masseverbindung eine definierte Masseverbindung des Gasgeneratorgehäuses hergestellt werden. Dies lässt sich in einem einzigen Arbeitsschritt durch Einstecken des Zündsteckers erreichen. Weiterhin wird durch das Verklemmen der Masseverbindung zwischen dem Zündstecker und dem Gasgeneratorgehäuse kein weiterer Anschluss für die Masseverbindung notwendig, so dass das übliche Konstruktionsprinzip bekannter Gasgeneratoren beibehalten werden kann. Eine sichere Verbindung der Masseverbindung mit dem Gasgenerator wird dadurch erreicht, dass der Zündstecker an dem Gasgenerator und/oder dem Gasgeneratorgehäuse verriegelbar ist. Dadurch wird verhindert, dass der Zündstecker oder die zwischen Zündstecker und Gasgeneratorgehäuse verklemmte Masseverbindung durch mechanische Erschütterungen gelöst werden kann. Durch die Verriegelung der Steckverbindung ist dennoch eine einfache Montage möglich.

Zur einfachen Kontaktierung des Gasgeneratorgehäuses beim Verklemmen der Masseverbindung zwischen dem Gasgeneratorgehäuse und einem Zündstecker weist die Masseverbindung einen ringförmigen Kontaktbereich auf, der zur Kontaktierung des Gasgeneratorgehäuses dient. Der ringförmige Kontaktbereich kann beispielsweise einen Kontaktbereich des Zündsteckers umfassen, gleichzeitig aber eine kleinere Dimension als das übrige Gehäuse des Zündsteckers aufweisen. Dadurch kann sowohl der Kontaktbereich des Zündsteckers als auch die Masseverbindung gleichzeitig in Kontakt mit dem Gasgenerator gebracht werden. Eine sichere Kontaktierung des Gasgeneratorgehäuses im ringförmigen Kontaktbereich kann erreicht werden, indem der rngförmige Kontaktbereich federelastisch oder als Federscheibe ausgebildet ist. Auch Toleranzen in der Fertigung bzw. ein nicht passgenau oder nicht vollständig eingeführter Zündstecker können so durch den federnden, ringförmigen Kontaktbereich ausgeglichen werden, wobei der federnde ringförmige Kontaktbereich auch den Zündstecker gegenüber dem Gasgeneratorgehäuse verspannt und so beispielsweise ein Klappern verhindert.

Eine einfache elektrische Isolierung des Gasgenerators gegenüber dem Fahrzeug kann erreicht werden, indem das Gasgeneratorgehäuse auf seiner Außenseite elektrisch solierend ausgebildet ist und insbesondere eine Beschichtung zur elektrischen Isolation gegenüber dem Fahrzeug aufweist. Bei Verwendung einer solchen elektrischen solierung auf der Außenseite des Gasgeneratorgehäuses können die sonst üblichen, elektrisch leitfähigen Befestigungsteile zur Befestigung des Gasgenerators am Fahrzeug weiter verwendet werden. Der Gasgenerator ist dann dennoch gegenüber dem Fahrzeug elektrisch isoliert.

Zur Isolierung des Gasgenerators gegenüber dem Fahrzeug kann weiterhin eine elektrisch isolierende Befestigungsvorrichtung verwendet werden, die insbesondere zumindest teilweise aus elektrisch isolierendem Material besteht oder einen Isolierbereich aufweist.

Die direkte Verbindung des Gasgenerators mit der elektrischen Masse des Fahrzeuges st auch über eine Steckverbindung möglich. Eine Steckverbindung weist die üblichen Vorteile einer sicheren Verbindung und einer einfachen Handhabbarkeit auf. In einer vorteilhaften Ausbildung wird die Masseverbindung in einen Zündstecker integriert.

Die Aufgabe wird weiterhin durch eine Vorrichtung zur elektrischen Kontaktierung eines Gasgenerators mit den Merkmalen des Anspruchs 14 gelöst.

Dem gemäß weist die Vorrichtung einen Zündstecker zur elektrischen Kontaktierung einer Zündvorrichtung eines Gasgenerators auf, wobei eine separate Masseverbindung zur direkten Verbindung des Gasgenerators mit der elektrischen Masse des Fahrzeuges, insbesondere mit einem definierten Massepotential, vorgesehen ist. Die Vorrichtung dient so gleichzeitig zur Kontaktierung der Zündvorrichtung des Gasgenerators über den Zündstecker, sowie zur Herstellung einer direkten Verbindung des Gasgenerators mit dem Massepotential des Fahrzeugs.

Die Masseverbindung wird vorteilhaft zwischen dem Gasgeneratorgehäuse des Gasgenerators und der elektrischen Masse des Fahrzeuges hergestellt. Dabei kann wiederum, wie bereits oben beschrieben, die Masseverbindung zwischen dem Zündstecker und einem Gasgeneratorgehäuse derart eingeklemmt werden, dass die Masseverbindung in Kontakt mit dem Gasgeneratorgehäuse steht. Zur einfachen Montage und kostengünstigen Herstellung bietet es sich an, dass die Masseverbindung einen ringförmigen Kontaktbereich aufweist, der insbesondere auch federelastisch oder als Federscheibe ausgebildet sein kann. Auf diese Weise kann eine sichere Verbindung zwischen der Masseverbindung und dem Gasgeneratorgehäuse hergestellt werden.

Die Erfindung hat den Vorteil, dass ein Gasgenerator bzw. das Gasgeneratorgehäuse auf sichere Weise mit dem Massepotential des Fahrzeugs verbunden wird. Dabei ist jeweils nur ein einziger, definierter Erdungspfad vorgesehen, so dass die Gefahr von Mehrfacherdungen und damit die Gefahr nicht eindeutig definierter Potentiale ausgeräumt ist. Auf diese Weise wird eine funktionssichere Einheit erreicht.

Die Erfindung wird im Folgenden anhand der Zeichnungen der Figuren exemplarisch erläutert. Es zeigen:
- Fig. 1: perspektivische Ansicht eines erfindungsgemäßen Gasgenerators mit einem Zündstecker und einer ein ringförmiges Kontaktelement aufweisenden Masseverbindung; und
- Fig. 2: perspektivische Ansicht des erfindungsgemäßen Gasgenerators aus Figur 1, wobei der Zündstecker und die Masseverbindung vom Gasgenerator getrennt sind.

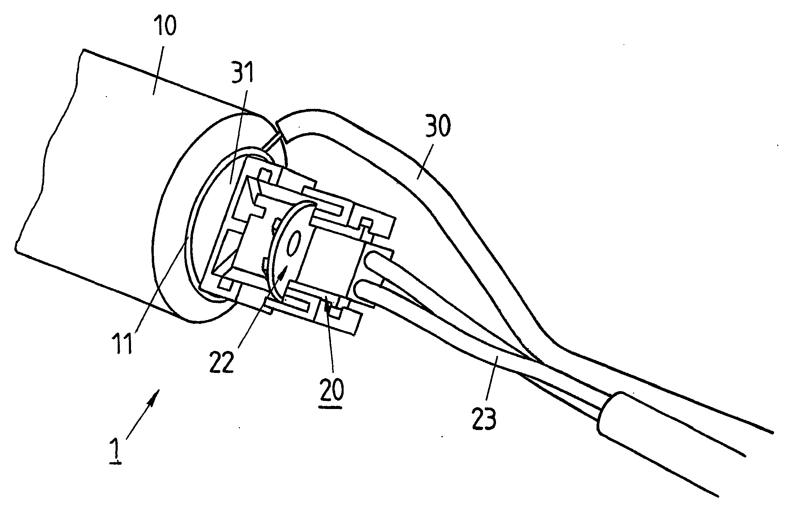

In Figur 1 ist ein Gasgenerator 1 mit einem Gasgeneratorgehäuse 10 gezeigt. Dieser Gasgenerator 1 ist über hier nicht dargestellte Befestigungsmittel mit ebenfalls nicht dargestellten Fahrzeugteilen des Fahrzeuges verbindbar. Die Isolierung des Gasgenerators 1 vom Fahrzeug wird über eine isolierende Beschichtung des Gasgeneratorgehäuses 10 erreicht.

Die sich im inneren des Gasgenerators 1 befindende und hier nicht gezeigte Zündvorrichtung, mit der der Gasgenerator 1 aktiviert wird, wird über einen Zündstecker 20 elektrisch kontaktiert. In Figur 1 ist der Zündstecker 20 in einer mit dem Gasgenerator 1 verbundenen Position gezeigt, wobei die Zündvorrichtung mit den jeweiligen Zündleitungen 23 in elektrischem Kontakt steht. Ein Verriegelungsmechanismus 22 dient zu festen Verriegelung des Zündsteckers 20 am Gasgenerator 1.

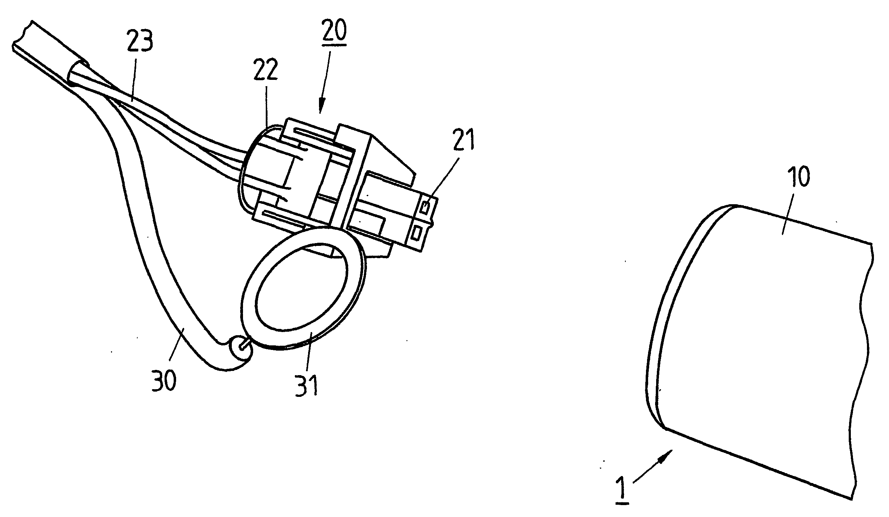

Zwischen dem Gehäuse des Zündsteckers 20 und dem Gasgeneratorgehäuse 10 ist ein ringförmiger Kontaktbereich 31 der Masseverbindung 30 angeordnet. Wie in Figur 2 gezeigt, handelt es sich bei dem Zündstecker 20 und dem ringförmigen Kontaktbereich 31 der Masseverbindung 30 um getrennte Bauteile. Der ringförmige Kontaktbereich 31 der Masseverbindung 30 wird durch Verbinden des Zündsteckers 20 mit dem Gasgenerator 1 zwischen dem Gehäuse des Zündsteckers 20 und dem Gasgeneratorgehäuse 10 eingeklemmt. Das Gasgeneratorgehäuse 10 weist in diesem Kontaktierungsbereich keine Isolierschicht auf, so dass der ringförmige Kontaktbereich 31 direkt mit dem Gasgeneratorgehäuse 10 in Kontakt tritt. Das Gehäuse des Zündsteckers 20 besteht hingegen aus Isoliermaterial, so dass durch das Einklemmen des ringförmigen Kontaktelementes 31 ein Massekontakt zwischen der Masseverbindung 30 und dem Gasgeneratorgehäuse 10 hergestellt wird.

Eine sichere Kontaktierung des ringförmigen Kontaktbereichs 31 mit dem Gasgeneratorgehäuse 10 wird dadurch erreicht, dass der ringförmige Kontaktbereich 31 federelastisch ausgebildet ist. Durch das Anpressen des Zündsteckers 20 und das nachfolgende Verriegeln der Verriegelungsvorrichtung 22 des Zündsteckers 20 wird der ringförmige Kontaktbereich 31 daher unter der Federvorspannung des federelastisch ausgebildeten ringförmigen Kontaktbereichs 31 verriegelt. Dadurch ist sichergestellt, dass der ringförmige Kontaktbereich 31 auch bei Vorliegen größerer Toleranzen des Zündsteckers sicher mit dem Gasgeneratorgehäuse 10 in Kontakt tritt.

Die Masseverbindung 30 wird auf eine hier nicht gezeigte zentrale Potentialschiene, die das Massepotenzial des Fahrzeuges definiert, gelegt. Der Gasgenerator 1 ist daher direkt und ausschließlich über die Masseverbindung 30 mit dem Massepotenzial des Fahrzeugs verbunden.

In Figur 2 ist der Kontaktbereich 21 des Zündsteckers 20 gezeigt, der mit einem korrespondierenden, nicht gezeigten Kontaktbereich des Gasgenerators 1 in Verbindung tritt.

In Figur 2 ist der Zündstecker 20 noch einmal von dem Gasgeneratorgehäuse 10 getrennt dargestellt. Die Masseverbindung 30 weist einen ringförmigen Kontaktbereich 31 auf, der federelastisch ausgeführt ist. Der Zündstecker 20 wird zur Verbindung mit dem Gasgeneratorgehäuse 10 durch den ringförmigen Kontaktbereich 31 der Masseverbindung 30 hindurchgeführt. Dabei ist der Durchmesser des ringförmigen Kontaktbereichs 31 so gewählt, dass Teile des Gehäuses des Zündsteckers 20 den ringförmigen Kontaktbereich 31 überragen. Gehäuseteile des Zündsteckers 20 klemmen so bei Verbindungen des Zündsteckers 20 mit dem Gasgeneratorgehäuse 10 bzw. einer daran angeordneten Steckeraufnahme den ringförmigen Kontaktbereich 31 zwischen den Gehäuseteilen des Zündsteckers 20 und dem Gasgeneratorgehäuse 10 fest. Dadurch wird der ringförmige Kontaktbereich 31 der Masseverbindung 30 direkt an das Gasgeneratorgehäuse 10 angeklemmt und kontaktiert dieses direkt.

## Patentansprüche

1. Gasgenerator zum Befüllen eines Airbags für ein Fahrzeug, wobei der Gasgenerator (1) gegenüber dem Fahrzeug elektrisch isoliert in dieses einbaubar ist und über eine separate Masseverbindung (30, 31) direkt mit der elektrischen Masse des Fahrzeugs, insbesondere mit einem definierten Massepotential, verbindbar ist ,
**dadurch gekennzeichnet,**
**dass** die Masseverbindung (30, 31) zwischen dem Gasgeneratorgehäuse (10) und einem Zündstecker (20, 21) derart einklemmbar ist, dass die Masseverbindung (30, 31) mit dem Gasgeneratorgehäuse (10) in elektrischen Kontakt kommt..

2. Gasgenerator nach Anspruch 1 mit einem Gasgeneratorgehäuse, **dadurch gekennzeichnet, dass** das Gasgeneratorgehäuse (10) über die Masseverbindung (30) mit der elektrischen Masse des Fahrzeugs verbindbar ist.

3. Gasgenerator nach Anspruch 2, **dadurch gekennzeichnet, dass** der Zündstecker (20) an dem Gasgenerator (1) und/oder dem Gasgeneratorgehäuse (10) verriegelbar ist.

4. Gasgenerator nach einem der Ansprüche 2 oder 3, **dadurch gekennzeichnet, dass** die Masseverbindung (30) einen ringförmigen Kontaktbereich (31) aufweist, mit dem das Gasgeneratorgehäuse (10) kontaktierbar ist.

5. Gasgenerator nach Anspruch 4, **dadurch gekennzeichnet, dass** der ringförmige Kontaktbereich (31) federelastisch ausgebildet ist.

6. Gasgenerator nach Anspruch 5, **dadurch gekennzeichnet, dass** der ringförmige Kontaktbereich (31) eine Federscheibe ist.

7. Gasgenerator nach einem der vorstehenden Ansprüche, **dadurch gekennzeichnet, dass** das Gasgeneratorgehäuse (10) auf seiner Außenseite elektrisch isolierend ausgebildet ist.

8. Gasgenerator nach Anspruch 7, **dadurch gekennzeichnet, dass** das Gasgeneratorgehäuse (10) eine Beschichtung zu dessen elektrischer Isolation gegenüber dem Fahrzeug aufweist.

9. Gasgenerator nach einem der vorstehenden Ansprüche, **gekennzeichnet durch** eine Befestigungsvorrichtung zur Befestigung des Gasgenerators (1) am Fahrzeug, wobei die Befestigungsvorrichtung den Gasgenerator (1) gegenüber dem Fahrzeug elektrisch isoliert.

10. Gasgenerator nach Anspruch 9, **dadurch gekennzeichnet, dass** die Befestigungsvorrichtung elektrisch isolierend ausgebildet ist.

11. Gasgenerator nach einem der vorstehenden Ansprüche, **dadurch gekennzeichnet, dass** der Gasgenerator (1) und/oder das Gasgeneratorgehäuse (10) des Gasgenerators (1) über eine Steckverbindung mit der elektrischen Masse des Fahrzeugs verbindbar ist.

12. Gasgenerator nach Anspruch 11, **dadurch gekennzeichnet, dass** die Steckverbindung zusätzlich zur elektrischen Kontaktierung einer Zündvorrichtung des Gasgenerators (1) dient.

13. Vorrichtung zur elektrischen Kontaktierung eines Gasgenerators, mit einem Zündstecker zur elektrischen Kontaktierung einer Zündvorrichtung des Gasgenerators, wobei eine separate Masseverbindung (30, 31) zur direkten Verbindung des Gasgenerators (1) mit der elektrischen Masse des Fahrzeugs, insbesondere mit einem definierten Massepotential, vorgesehen ist,
**dadurch gekennzeichnet,**
**dass** die Masseverbindung (30, 31) zwischen dem Zündstecker (20, 21) und einem Gasgeneratorgehäuse (10) derart einklemmbar ist, dass die Masseverbindung (30, 31) in Kontakt mit dem Gasgeneratorgehäuse (10) steht.

14. Vorrichtung nach Anspruch 13, **dadurch gekennzeichnet, dass** die separate Masseverbindung (30, 31) zur Verbindung eines Gasgeneratorgehäuses (10) mit der elektrischen Masse des Fahrzeugs dient.

15. Vorrichtung nach einem der Ansprüche 13 oder 14, **dadurch gekennzeichnet, dass** die Masseverbindung (30) einen ringförmigen Kontaktbereich (31) aufweist, mit dem ein Gasgeneratorgehäuse (10) kontaktierbar ist.

16. Vorrichtung nach Anspruch 15, **dadurch gekennzeichnet, dass** der ringförmige Kontaktbereich (31) federelastisch ausgebildet ist.

17. Vorrichtung nach Anspruch 15, **dadurch gekennzeichnet, dass** der ringförmige Kontaktbereich (31) eine Federscheibe ist.

## Claims

1. A gas generator for filling an airbag for a vehicle, it being possible for the gas generator (1) to be installed in the vehicle such that it is electrically insulated with respect to said vehicle and for it to be connected directly to the electrical ground of the vehicle, in particular to a defined ground potential, by means of a separate ground connection (30, 31),
**characterized**
**in that** the ground connection (30, 31) can be clamped in between the gas generator housing (10) and an ignition plug (20, 21) such that the ground connection (30, 31) comes into electrical contact with the gas generator housing (10).

2. The gas generator as claimed in claim 1 having a gas generator housing, **characterized in that** the gas generator housing (10) can be connected to the electrical ground of the vehicle by means of the ground connection (30).

3. The gas generator as claimed in claim 2, **characterized in that** the ignition plug (20) can be latched onto the gas generator (1) and/or the gas generator housing (10).

4. The gas generator as claimed in either of claims 2 or 3, **characterized in that** the ground connection (30) has an annular contact region (31), it being possible for contact to be made between said contact region (31) and the gas generator housing (10).

5. The gas generator as claimed in claim 4, **characterized in that** the annular contact region (31) is resilient.

6. The gas generator as claimed in claim 5, **characterized in that** the annular contact region (31) is a spring disk.

7. The gas generator as claimed in one of the preceding claims, **characterized in that** the gas generator housing (10) is electrically insulating on its outer side.

8. The gas generator as claimed in claim 7, **characterized in that** the gas generator housing (10) has a coating for the purpose of electrically insulating it with respect to the vehicle.

9. The gas generator as claimed in one of the preceding claims, **characterized by** a fixing device for the purpose of fixing the gas generator (1) to the vehicle, the fixing device electrically insulating the gas generator (1) with respect to the vehicle.

10. The gas generator as claimed in claim 9, **characterized in that** the fixing device is electrically insulating.

11. The gas generator as claimed in one of the preceding claims, **characterized in that** the gas generator (1) and/or the gas generator housing (10) of the gas generator (1) can be connected to the electrical ground of the vehicle by means of a plug connection.

12. The gas generator as claimed in claim 11, **characterized in that** the plug connection additionally serves the purpose of making electrical contact with an ignition device of the gas generator (1).

13. A device for making electrical contact with a gas generator, having an ignition plug for making electrical contact with an ignition device of the gas generator, a separate ground connection (30, 31) being provided for the purpose of directly connecting the gas generator (1) to the electrical ground of the vehicle, in particular to a defined ground potential,
**characterized**
**in that** the ground connection (30, 31) can be clamped in between the ignition plug (20, 21) and a gas generator housing (10) such that the ground connection (30, 31) is in contact with the gas generator housing (10).

14. The device as claimed in claim 13, **characterized in that** the separate ground connection (30, 31) serves the purpose of connecting a gas generator housing (10) to the electrical ground of the vehicle.

15. The device as claimed in either of claims 13 or 14, **characterized in that** the ground connection (30) has an annular contact region (31), it being possible for contact to be made between said contact region (31) and a gas generator housing (10).

16. The device as claimed in claim 15, **characterized in that** the annular contact region (31) is resilient.

17. The device as claimed in claim 15, **characterized in that** the annular contact region (31) is a spring disk.

## Revendications

1. Générateur de gaz pour le remplissage d'un airbag destiné à un véhicule automobile, dans lequel le générateur de gaz (1), isolé électriquement par rapport au véhicule, peut être installé dans celui-ci et peut être raccordé par l'intermédiaire d'une connexion de masse séparée (30, 31) directement avec la masse électrique du véhicule, en particulier avec un potentiel de masse défini,
**caractérisé en ce que**
la connexion de masse (30, 31) entre le logement du générateur de gaz (10) et un contacteur d'allumage (20, 21) est enfichable, de telle sorte que la connexion de masse (30, 31) vient en contact électrique avec le logement du générateur de gaz (10).

2. Générateur de gaz selon la revendication 1, comportant un logement de générateur de gaz, **caractérisé en ce que** le logement du générateur de gaz (10) peut être raccordé à la masse électrique du véhicule par l'intermédiaire de la connexion de masse (30).

3. Générateur de gaz selon la revendication 2, **caractérisé en ce que** le contacteur d'allumage (20) peut être verrouillé sur le générateur de gaz (1) et/ou le logement de générateur de gaz (10).

4. Générateur de gaz selon l'une des revendications 2 ou 3, **caractérisé en ce que** la connexion de masse (30) présente une zone de contact annulaire (31) avec laquelle le logement du générateur de gaz (10) peut être mis en contact.

5. Générateur de gaz selon la revendication 4, **caractérisé en ce que** la zone de contact annulaire (31) est de configuration élastique à ressort.

6. Générateur de gaz selon la revendication 5, **caractérisé en ce que** la zone de contact annulaire (31) est une rondelle à ressort.

7. Générateur de gaz selon l'une des revendications précédentes, **caractérisé en ce que** le logement du générateur de gaz (10) est configuré de façon électriquement isolante sur son côté extérieur.

8. Générateur de gaz selon la revendication 7, **caractérisé en ce que** le logement du générateur de gaz (10) présente un revêtement pour son isolation électrique vis-à-vis du véhicule.

9. Générateur de gaz selon l'une des revendications précédentes, **caractérisé par** un dispositif de fixation destiné à assujettir le générateur de gaz (1) sur le véhicule, dans lequel le dispositif de fixation isole électriquement le générateur de gaz (1) par rapport au véhicule.

10. Générateur de gaz selon la revendication 9, **caractérisé en ce que** le dispositif de fixation est configuré de façon électriquement isolante.

11. Générateur de gaz selon l'une des revendications précédentes, **caractérisé en ce que** le générateur de gaz (1) et/ou le logement du générateur de gaz (10) du générateur de gaz (1) peuvent être raccordés par l'intermédiaire d'une connexion à fiche avec la masse électrique du véhicule.

12. Générateur de gaz selon la revendication 11, **caractérisé en ce que** la connexion à fiche sert de plus à la mise en contact électrique d'un dispositif d'allumage du générateur de gaz (1).

13. Dispositif pour la mise en contact électrique d'un générateur de gaz avec un contacteur d'allumage pour la mise en contact électrique d'un dispositif d'allumage du générateur de gaz, dans lequel une connexion de masse séparée (30, 31) est prévue pour la connexion directe du générateur de gaz (1) avec la masse électrique du véhicule, en particulier avec un potentiel de masse défini,
**caractérisé en ce que**
la connexion de masse (30, 31) entre le contacteur d'allumage (20, 21) et un logement de générateur de gaz (10) peut être enfichée, de telle sorte que la connexion de masse (30, 31) se trouve en contact avec le logement du générateur de gaz (10).

14. Dispositif selon la revendication 13, **caractérisé en ce que** la connexion de masse séparée (30, 31) sert à la connexion d'un logement du générateur de gaz (10) avec la masse électrique du véhicule.

15. Dispositif selon l'une des revendications 13 ou 14, **caractérisé en ce que** la connexion de masse (30) présente une zone de contact annulaire (31) avec laquelle un logement de générateur de gaz (10) peut être mis en contact.

16. Dispositif selon la revendication 15, **caractérisé en ce que** la zone de contact annulaire (31) est de configuration élastique à ressort.

17. Dispositif selon la revendication 15, **caractérisé en ce que** la zone de contact annulaire (31) est une rondelle à ressort.
